# FASCICULE DE BREVET EUROPEEN

(11) **EP 2 072 850 B1**
(45) Date de publication et mention de la délivrance du brevet: **25.02.2015**
(21) Numéro de dépôt: 08171286.1
(22) Date de dépôt: 11.12.2008
(51) Int. Cl.: F16D 65/097

(54) **Système de montage de patin de frein à disque**
Montagesystem für Bremsbelagträger von Scheibenbremsen
System for installing a disc brake shoe

(30) Priorité: 21.12.2007 FR 0709198
(43) Date de publication de la demande: 24.06.2009
(73) Titulaire: Chassis Brakes International B.V., 1011 VM Amsterdam (NL)
(72) Inventeur: Rossignol, Magali, 49630 Corne (FR); Champion, Pascal, 49240 Avrille (FR); Audinay, Daniel, 08005- Barcelona (ES); Pasquet, Thierry, 93190 Livry Gargan (FR); Vinck, Jan, 49250 Beaufort en Vallée (FR); Legendre, Matthieu, 75004 Paris (FR)
(74) Mandataire: Hurwic, Aleksander Wiktor

(56) Documents cités:
- EP-A- 1 591 686
- GB-A- 2 093 541
- US-A- 3 638 765
- US-A1- 2005 115 779

## Description

L'invention se rapporte à un dispositif de montage d'un patin de frein dans des logements d'une chape d'un frein à disque et notamment un dispositif permettant de faciliter le déplacement d'un support de plaquette de frein qui se produit lors d'un freinage et qui permette d'éviter des bruits qui sont souvent engendrés lors d'un tel fonctionnement. L'invention concerne également un frein à disque équipé de dispositifs de montage selon l'invention.

Dans un véhicule équipé de freins à disques, chaque roue qui doit être freinée par un tel système de freinage comporte un disque de freinage solidaire de la roue et un dispositif de freinage solidaire du châssis du véhicule qui vient par friction freiner le mouvement de rotation du disque. Le dispositif de freinage comporte, de chaque côté du disque de freinage, un patin de frein constitué d'un support de plaquette portant une plaquette de frein. Chaque patin de frein est mobile perpendiculairement au plan du disque (selon une direction que nous appellerons direction axiale) et est guidé par deux de ses extrémités appelées "oreilles" dans des logements d'une chape. Des organes de commande permettent d'exercer une pression sur les patins de freins selon la direction axiale. Les deux patins de freins disposés de part et d'autre d'un disque permettent donc, lors d'un freinage, d'enserrer le disque et de freiner sa rotation.

Lors d'un freinage, les patins de freins sont entraînés selon une direction tangentielle au disque et les oreilles viennent buter, parfois brutalement, contre le fond de leur logement de guidage provoquant un bruit appelé "klonk" ou claquement. Pour amortir le choc des oreilles dans leur logement et ainsi atténuer le bruit, il est prévu, de manière connue, un ressort situé entre chaque oreille et son logement. Cet effet d'amortissement est obtenu par déformation du ressort. La forme du ressort doit donc être adaptée à la force exercée par le patin de frein lors de son déplacement tangentiel. Cette force est fonction de la masse du patin et de sa vitesse d'entraînement. Le calibrage du ressort doit donc, en principe, tenir compte du type de véhicule et du type de patin.

Par ailleurs, le patin doit pouvoir se déplacer axialement comme cela a été expliqué précédemment. Les oreilles du patin doivent donc glisser dans le ressort de maintien.

On a donc un effet glissière et un effet ressort sur une seule et unique pièce.

Une fois le patin en place et, du fait des défauts géométriques et de l'effet ressort, le système glissière se déforme et entraîne la création d'effet ressort/raideur influant sur la génération de bruit au freinage.
Le document US 2005/0115779 Al décrit un dispositif d'après le préambule de la revendication 1.

L'objet de l'invention est donc un dispositif permettant d'améliorer le glissement des oreilles du patin lors d'une commande de freinage.

L'invention a donc pour objet un dispositif de montage d'un patin de frein dans des logements d'une chape d'un frein à disque. Un tel patin de frein comprend à deux de ses extrémités deux oreilles de montage et

chaque oreille est montée dans un logement d'une chape d'un frein à disque. Le dispositif de montage selon l'invention comporte pour chaque oreille du patin, un premier ressort de forme linéaire ou lamellaire destiné à prendre appui, d'une part, sur la face inférieure du logement de la chape de façon à écarter la face inférieure de l'oreille de la face inférieure du logement de la chape.

Selon l'invention ledit ressort comporte:
- une première branche d'appui qui est placée contre la face inférieure de l'oreille du patin et qui est destinée à appuyer sur cette face inférieure,
- une deuxième branche de glissement en contact avec la face inférieure du logement de la chape. Cette branche a une forme courbe. Elle est située parallèlement à un plan perpendiculaire au plan de l'oreille et elle a une surface convexe destinée à glisser sur ladite face inférieure du logement de la chape,
- une troisième branche et une quatrième branche reliées entre elles et permettant de relier la première branche à la deuxième branche pour les écarter 1'une de l'autre.

Selon une variante de réalisation, le dispositif de l'invention comporte un deuxième ressort qui comporte:
- une première branche d'appui destinée à être placée contre une face latérale de l'oreille du patin,
- une deuxième branche de glissement destinée à être en contact avec une face latérale du logement de la chape. Cette branche est située parallèlement à un plan perpendiculaire au plan de l'oreille. Elle une forme courbe et présente une surface convexe destinée à glisser sur ladite face latérale du logement de la chape,
- une troisième branche et une quatrième branche reliées entre elles et permettant de relier la première branche à la deuxième branche pour les écarter l'une de l'autre.

Selon une forme de réalisation avantageuse de l'invention lesdits premier et deuxième ressorts comportent chacun une cinquième branche reliée à la deuxième branche du ressort et permettant d'enserrer les faces axiales de l'oreille en coopération avec la troisième branche.

On peut également prévoir avantageusement que lesdits premier et deuxième ressorts comportent chacun une sixième branche reliée à la première branche du ressort et permettent d'enserrer les faces axiales de l'oreille du patin en coopération avec la troisième branche.

Selon une variante de réalisation lesdits premier et/ou deuxième ressorts comportent chacun une septième branche reliant la sixième branche à la deuxième branche du ressort.

Selon une forme de réalisation préférée de l'invention, lesdits premier et deuxième ressorts sont de forme filaire et leurs différentes branches sont situées parallèlement à un plan qui est perpendiculaire au plan du patin.

Selon une variante de réalisation de l'invention le dispositif de montage peut comporter un dispositif possédant au moins une plaque de glissement. Une première plaque de glissement est destinée à être intercalée entre une face latérale d'une oreille de montage du patin et une face latérale d'un logement de la chape. Cette première plaque de glissement est couplée mécaniquement, par une charnière élastique dont l'élasticité est supérieure à l'élasticité de la première plaque de glissement, à un dispositif de fixation destiné à être fixé à la chape.

Avantageusement, la première plaque de glissement est couplée par une extrémité au dispositif de fixation de telle façon que son extrémité opposée soit destinée à exercer un effort de pression sur la face dudit logement de la chape lorsque ledit dispositif de montage est monté sur la chape.

On peut également prévoir avantageusement qu'une arête de ladite première plaque de glissement est couplée à une arête d'une deuxième plaque de glissement appartenant au dispositif de fixation. Cette deuxième plaque de fixation est destinée à être plaquée contre une face radiale dudit logement de la chape, ladite charnière comportant au moins un élément de raccordement dont la longueur est inférieure à la longueur desdites arêtes des première et deuxième plaques de glissement.

Selon une forme de réalisation avantageuse de l'invention, l'angle formé par la première et la deuxième plaque, lorsque le dispositif de montage n'est pas monté sur une chape de frein à disque, est supérieur à l'angle formé par les faces latérale et radiale du logement d'une chape sur laquelle le dispositif de montage est destiné à être monté.

On peut alors éventuellement prévoir que ledit angle formé par la première et la deuxième plaque, lorsque le dispositif de montage n'est pas monté sur une chape de frein à disque, est supérieur à 90 degrés.

Selon un exemple de réalisation de ce dispositif de fixation, ce dispositif comporte une première lame ressort qui coopère ave la deuxième plaque de glissement pour enserrer une pièce de fixation appartenant à la chape.

On peut également prévoir que le dispositif de fixation comporte une deuxième et une troisième lame ressort qui enserrent ladite pièce de fixation appartenant à la chape.

Selon une forme de réalisation avantageuse de l'invention, la première plaque de glissement et/ou la deuxième plaque de glissement sont en acier inoxydable.

Selon une autre variante de réalisation de l'invention, le dispositif de montage peut comporter un dispositif de couplage fixé sur la face du patin, destinée à faire face à un piston de commande de frein, 1 sensiblement dans une zone centrale du patin de frein. Ce dispositif de couplage est destiné à coupler le patin à un piston de commande de frein et comporte des lames élastiques qui sont destinées à enserrer la périphérie dudit piston de commande.

Ce dispositif de couplage comporte deux lames situées selon une direction latérale (X) et destinées à être diamétralement opposées par rapport à l'axe du piston de commande de frein.

Avantageusement, il est également prévu une autre lame située selon une direction radiale (Y), et destinée à être au dessus dudit piston de commande de frein.

L'invention concerne également une application, à un frein à disque, des dispositifs de montage ainsi décrits pour guider les patins de frein.

Avantageusement, un tel frein à disque comporte un dispositif de montage associé à chaque oreille des patins de frein.

### BREVE DESCRIPTION DES FIGURES

Les différents objets et caractéristiques de l'invention apparaîtront plus clairement dans la description qui va suivre ainsi que dans les figures annexées qui représentent:
- la figure 1, un exemple de montage d'un patin de frein dans une chape d'un frein à disque selon une technique connue,
- la figure 2a, une vue de face d'un patin de frein équipé d'un exemple de réalisation d'un dispositif de montage selon l'invention,
- la figure 2b, une vue en perspective du patin de frein de la figure 2a,
- les figures 3a à 3c, différents exemples de réalisation du dispositif de montage selon l'invention,
- la figure 4a, une vue de face d'un patin de frein monté dans une chape d'un frein à disque à l'aide de dispositifs de montage selon l'invention,
- la figure 4b, une vue en perspective partielle du montage de la figure 4a,
- la figure 5a, une vue de face d'un patin de frein équipé d'une variante de réalisation d'un dispositif de montage selon l'invention,
- la figure 5b, une vue de face d'un patin de frein monté dans une chape d'un frein à disque à l'aide de dispositifs de montage conformes à ceux de la figure 5a,
- les figures 5c à 5e, des exemples de réalisation de ressorts applicables au dispositif des figures 5a et 5b,
- la figure 6a, une vue de face d'un exemple de réalisation du dispositif de montage selon l'invention d'un patin de frein dans des logements d'une chape d'un frein à disque,
- la figure 6b, une vue de face du dispositif de la figure 6a monté sur une chape d'un frein à disque,
- les figures 6c et 6d, respectivement, une vue en perspective et une vue de face du montage de la figure 6b,
- la figure 7a une vue en perspective permettant d'expliquer les fonctions des éléments du dispositif de montage d'un patin de frein selon l'invention,
- les figures 7b et 7c, des vues en perspectives des dispositifs de montage des deux oreilles d'un patin,
- la figure 8a, une vue de face du dispositif de montage de la figure 6a sur laquelle sont indiquées les caractéristiques de ce dispositif,
- la figure 8b, une vue de face du dispositif de la figure 8a monté sur une chape d'un frein à disque avec indiqués les efforts exercés,
- la figure 8c une vue en perspective du dispositif selon l'invention sur laquelle les articulations élastiques du dispositif sont mises en évidence,
- la figure 9a, une vue de face d'un patin de frein équipé d'une autre variante de réalisation du dispositif de montage selon l'invention,
- les figures 9b à 9d, respectivement, des vues de face, en coupe aa et coupe bb d'un exemple de réalisation du dispositif de montage de la figure 9a.

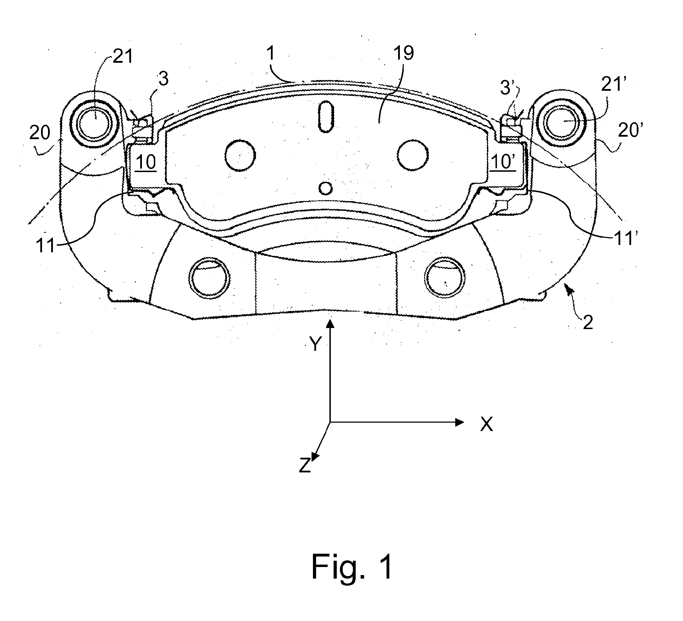

En se reportant à la figure 1, on va donc tout d'abord décrire un système de montage d'un patin de frein dans une chape d'un frein à disque tel que connu dans la technique.

Dans la description qui va suivre on désignera par:
- "radial", un élément situé selon l'axe radial du système (l'axe Y sur la figure 1),
- "latéral", un élément situé selon un axe parallèle à une tangente au disque 1 (l'axe X sur la figure 1),
- "axial", un élément situé selon un axe perpendiculaire au plan du disque 1 (l'axe Z sur la figure 1).

La chape 2 comporte deux bras tel que 20 disposés de part et d'autre d'un disque 1 (représenté en trait mixte sur la figure 1). Ces deux bras sont reliés par deux pontets 21 et 21' s'étendant axialement et disposés radialement au-delà du disque 1.

Chaque bras possède à ses extrémités des gorges ou logements 11 et 11' dans lesquelles sont placées les oreilles d'extrémités 10 et 10' d'un patin de frein.

Les oreilles d'extrémités 10 et 10' du patin sont montées dans les logements 11 et 11' à l'aide de ressorts 3 et 3'. Les oreilles 10 et 10' coulissent axialement dans les ressorts 3 et 3' (c'est-à-dire perpendiculairement au plan de la figure).

Le fonctionnement d'un tel frein à disque est bien connu dans la technique et ne sera pas décrit plus en détail.

Le rôle des ressorts 3 et 3' est d'amortir les chocs des oreilles des patins contre le fond des logements lorsque les patins sont entraînés par le disque 1 durant un freinage. Cet amortissement est obtenu par la déformation des ressorts lorsqu'ils sont écrasés sous l'effet de la force des patins.

Cependant, lors d'un freinage, les patins de freins doivent se déplacer axialement et il est fréquent que le glissement des oreilles des patins dans ces ressorts soient à l'origine de bruits perceptibles dans l'habitacle du véhicule.

L'invention prévoit donc un dispositif permettant de monter un patin de frein dans une chape de frein à disque et qui permette de diminuer ou d'éliminer ces bruits.

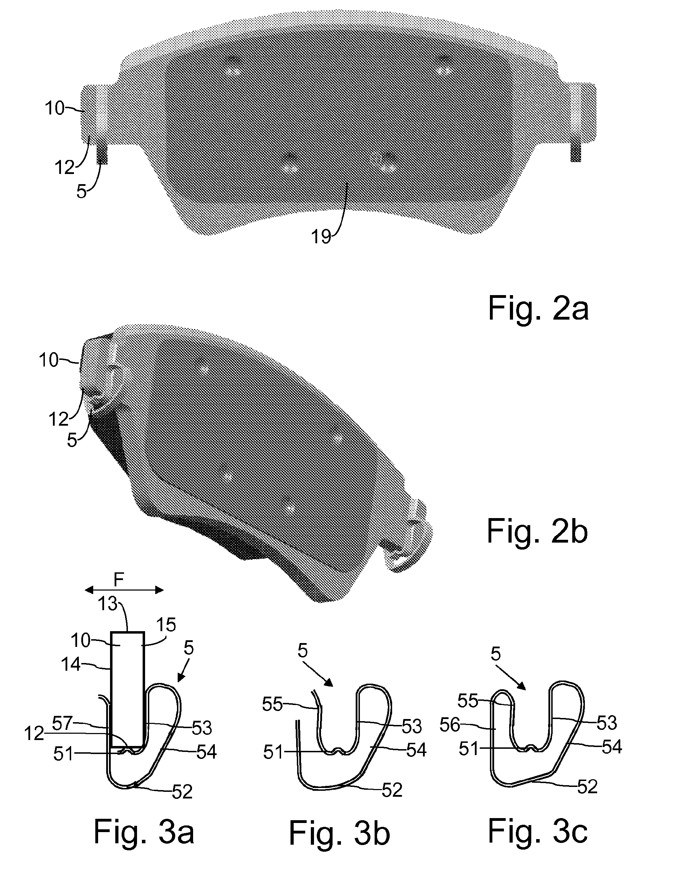

Les figures 2a à 3a représentent un exemple de réalisation du dispositif de l'invention. Ce dispositif comporte essentiellement un ressort d'une forme particulièrement qui enserre deux faces axiales d'une oreille d'un patin de frein. Par exemple, sur la figure 2a, ce ressort 5 est monté sur l'oreille 10 du patin 19.

La vue en perspective de la figure 2b montre que le ressort 5 enserre deux faces axiales de l'oreille 10 et qu'il possède une partie inférieure destinée à s'appuyer sur une face inférieure d'un logement de la chape comme cela sera décrit ultérieurement.

Le ressort 5 est de forme filaire, mais il peut aussi être de forme lamellaire.

La figure 3a montre un exemple de réalisation d'un tel ressort 5 monté sur l'oreille 10 d'un patin.

Ce ressort comporte:
- une première branche 51 qui prend appui sur la face inférieure 12 de l'oreille 10,
- une deuxième branche 52 qui est destinée à être en contact avec la face inférieure d'un logement de la chape comme cela sera décrit ci-après. Cette branche a une forme courbe. Elle est située parallèlement à un plan perpendiculaire au plan de l'oreille et a une surface convexe destinée à glisser sur la face inférieure du logement,
- une troisième branche 53 et une quatrième branche 54 qui sont reliées entre elles et qui permettent de reliée la première branche à la deuxième branche pour les écarter l'une de l'autre. Ces branches 53 et 54 ont des caractéristiques élastiques et permettent d'écarter les branches 51 et 52 l'une de l'autre.

De cette façon, lorsque l'oreille 10 et son ressort de montage 5 est placé dans un logement d'une chape d'un frein à disque, la branche 52 est en contact avec la face inférieure du logement. La branche 51 tend à pousser l'oreille 10 vers le haut et à plaquer la face 13 de l'oreille contre la face supérieure du logement.

Lors d'une commande de freinage, le patin de frein est commandé de telle façon que l'oreille 10 se déplace selon la direction F (voir figure 3a). La branche 52 du ressort se déplace également selon cette direction F. En raison de la forme courbe et convexe de la branche 51, le ressort glisse aisément sur la face inférieure du logement de la chape.

Par ailleurs, le ressort comporte une branche 57 reliée à la branche 52 et qui est destinée à être en contact avec la face latérale (axiale) 14 de l'oreille. Les branches 57 et 53 enserrent les faces axiales 14 et 15 de l'oreille ce qui permet un montage du ressort sur l'oreille 10.

La figure 3b représente une variante de réalisation du ressort dans laquelle une branche 55 est reliée à la première branche 51 et permet d'enserrer les faces 14 et 15 de l'oreille en coopération avec la branche 53.

La figure 3c représente une variante de réalisation de la figure 3b dans laquelle une branche 56 relie les branches 52 et 55 ce qui permet de rigidifier le ressort.

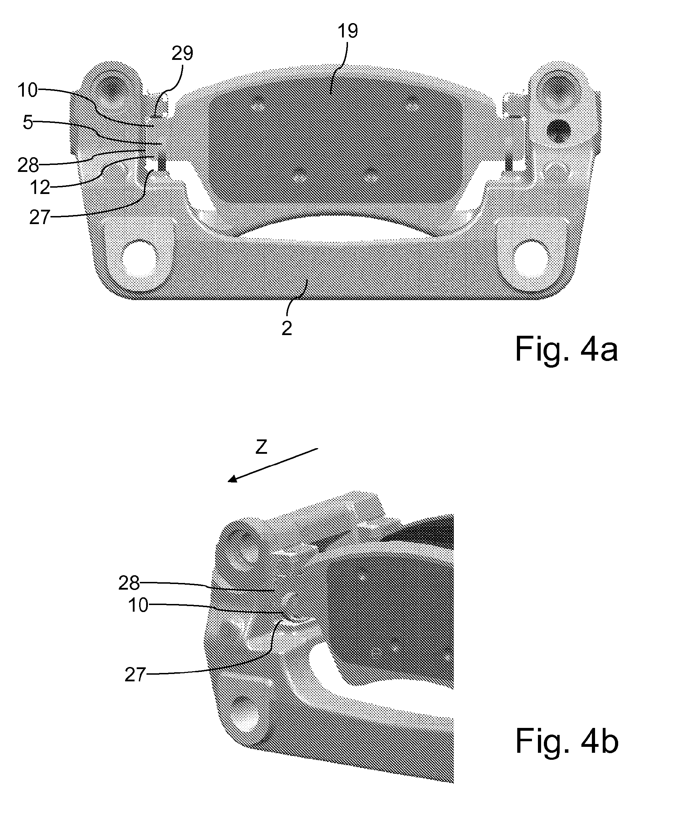

La figure 4a représente un patin de frein 19 monté dans une chape 2. Les oreilles du patin sont placées dans des logements de la chape. Le ressort 5 enserre l'oreille 10. Il exerce une pression dirigée vers le bas sur la face inférieure 27 du logement par sa branche 52 (figures 3a à 3c) et une pression dirigée vers le haut sur la face inférieure 12 de l'oreille du patin par sa branche 51. Le ressort 5 force donc l'oreille du patin à être plaquée contre la face supérieure 29 du logement de la chape.

La figure 4b représente une vue en perspective partielle du montage de la figure 4a. On voit donc que le patin 10 peut glisser aisément selon la direction axiale Z en raison de la forme arrondie de la branche 52 du ressort 5.

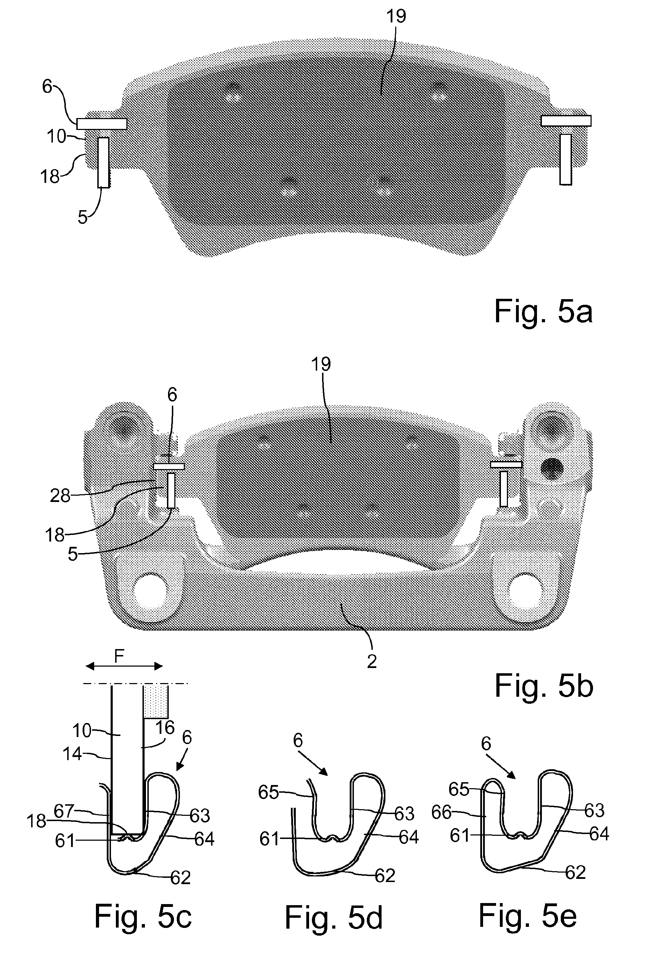

En se reportant aux figures 5a à 5e, on va décrire une variante de réalisation du dispositif de montage selon l'invention. Selon cette variante, chaque oreille est munie d'un deuxième ressort 6 similaire au ressort 5. Il est monte sur l'oreille 10 selon un plan perpendiculaire au plan du ressort 5 (voir figure 5a).

Comme cela est représenté par la figure 5b, le ressort 6 est destiné à prendre appui sur la face radiale 28 du fond du logement de la chape.

Les figures 5c à 5e font apparaître que ce ressort 6 peut être conçu de la même façon que le ressort 5.

En se reportant à la figure 5c, on va décrire plus en détail ce ressort 6.

La branche 61 est destinée à prendre appui sur la face latérale 18 de l'oreille du patin. La branche 62 est destinée à prendre appui sur la face latérale 28 d'un logement de la chape (voir figure 5b). Les branches 63 et 67 enserrent les faces axiales 14 et 16 de l'oreille 10. La branche 64 relie la branche 61 à la branche 62.

Les figures 5d et 5e représentent des formes de réalisation du ressort 6 similaires aux formes de réalisation du ressort 5 qui sont représentées par les figures 3b et 3c.

Le ressort 6 est orienté selon un plan axial, ce qui permet un glissement axial du patin.

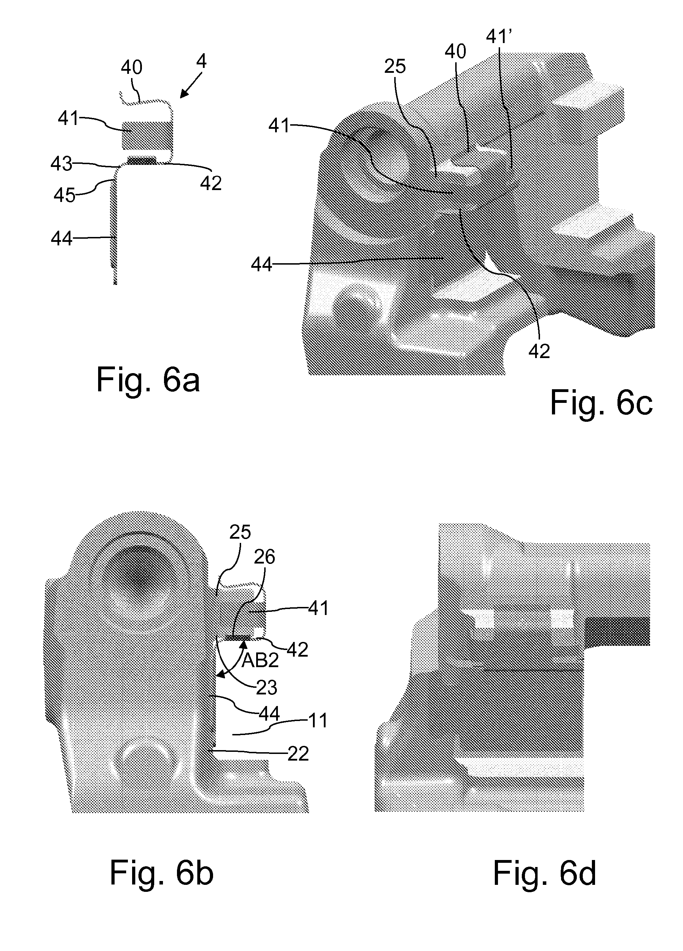

L'invention concerne également une autre variante de réalisation du dispositif de montage du patin de frein selon l'invention. Selon cette variante, on prévoit également un dispositif de montage tel que représenté en vue de côté sur la figure 6a.

Ce dispositif comporte une plaque 44, que nous appellerons plaque de glissement, et un dispositif de fixation 40-41-42. La plaque de glissement est reliée par une extrémité 45 au dispositif de fixation par une charnière 43. Elle est destinée à être plaquée contre la face latérale 22 du logement 11 de la chape, cette face latérale 22 constituant le fond du logement.

Le dispositif de fixation comporte une autre lame de glissement 42 destinée à être plaquée contre la face radiale 26 (ou face supérieure) du logement 11. Le dispositif de fixation comporte en outre une lame ressort 40 qui, en coopération avec la plaque de glissement 42, enserre un plot 25 appartenant à la chape.

Comme cela est représenté sur la vue de face de la figure 6b et sur la figure en perspective 2c, lorsque le dispositif de fixation est monté sur la chape, le dispositif de fixation est embroché sur le plot 25 avec la lame 40 et la plaque 42 situées de part et d'autre du plot 25.

De plus, avantageusement, le dispositif de fixation peut comporter deux lames ressort 41 et 41' (voir figure 6c) qui enserrent les côtés ou faces radiales du plot 25.

Lorsque le dispositif de montage selon l'invention est monté sur la chape, le dispositif de fixation est emmanché sur le plot 25 et les lames ressort 40, 41 et 41 le maintiennent efficacement en position (figure 6c). Les plaques de glissement 42 et 44 sont plaquées respectivement contre les faces latérales 22 et radiale 26 du logement 11.

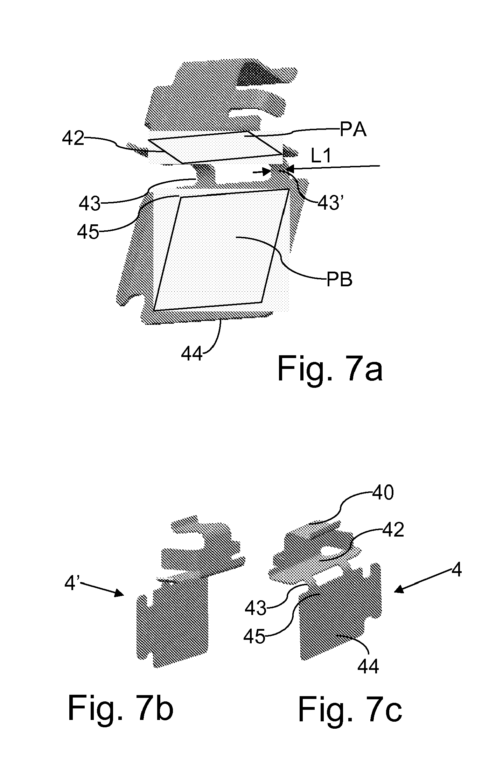

La figure 7a représente un mode de réalisation préféré de l'invention dans lequel l'extrémité 45 de la plaque de glissement 44 est reliée par deux éléments charnières 43 et 43' à la plaque de glissement 42. Ces éléments charnières ont une longueur axiale Ll très faible comparée à la longueur de l'arête de l'extrémité 45 de la plaque 44. De cette façon, les charnières 43 et 43' présente une grande souplesse élastique. Les plaques 44 et 42 peuvent être plaquée efficacement contre les faces du logement 11 de la chape. Les faces de glissement PA et PB (figure 7a) contre lesquelles viendra glisser une oreille d'un patin de frein sont donc des faces qui présenteront une grande stabilité.

Les figures 7b et 7c représentent deux dispositifs selon l'invention permettant le montage d'un patin de frein. Le dispositif de montage 4 servira au montage d'une oreille du patin et le dispositif 4' servira au montage de l'autre oreille.

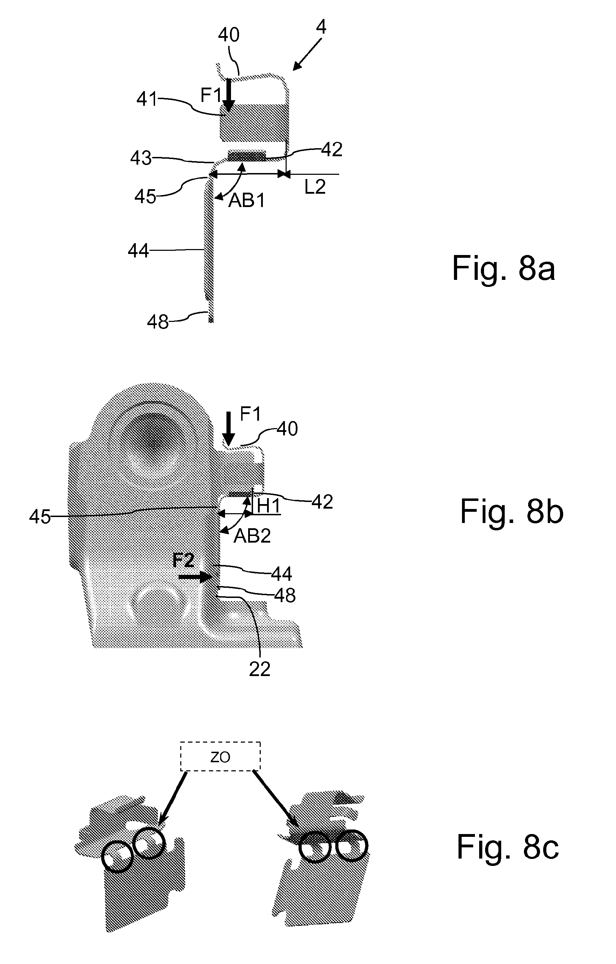

Les figures 8a à 8c représentent plus en détails la conception du dispositif de montage de la figure 8a.

En effet selon l'invention, lorsque le dispositif de montage n'est pas monté sur une chape d'un frein à disque, les plaques de glissement 44 et 42 présentent un angle AB1 lorsque le dispositif est au repos et ne supporte aucune sollicitation. Cet angle est supérieur à l'angle AB2 que forment les faces latérale et radiale (26 et 22 sur la figure 6b) du logement 11 de la chape.

Lorsque le dispositif de montage est monté sur le plot 25 de la chape avec les plaques de glissement 44 et 42 située à l'intérieur du logement:
- la plaque de glissement 42 se trouve plaquée contre la face radiale supérieure (26 sur la figure 6b) du logement en raison de l'effort F1 exercé par la lame ressort 40 (figure 8b),
- la plaque de glissement 44 est plaquée contre la face latérale 22 du logement de la chape.

Les plaques de glissement adoptent entre elles un angle AB2 égal à l'angle formé par les faces latérale et radiale du logement de la chape. En raison du fait que l'angle AB1 est supérieure à l'angle AB2 et que l'extrémité 45 se trouve plaqué contre la face latérale 22 du logement, l'extrémité 48 appui sur la face 22 et un effort de réaction est exercé par la face 22 sur l'extrémité 48 de la plaque 44.

Dans le cas où le patin de frein est équipé de ressorts 5 tel que cela a été décrit en relation avec les figures 2a à 4b, la face supérieure (radiale) 13 de chaque oreille est en contact avec la plaque de glissement 42 du dispositif 4. La face radiale 18 de chaque oreille est en contact avec la plaque de glissement 44 de ce dispositif 4.

Dans le cas où le patin est en outre équipé de ressort 6 (figures 5a à 5e), la branche 62 de chaque ressort 6 est en contact avec une plaque de glissement 44 et glisse sur cette plaque.

On voit donc que:
- la fonction coulissement de l'oreille du patin se fera sur deux plans angulairement orientés,
- les deux plaques de glissement en place sont parfaitement en appui sur les deux plans du logement de la chape.

Par ailleurs, le dispositif de fixation et notamment la lame ressort 40 qui exerce un effort de pression F1 assure un plaquage de la plaque de glissement 42 contre la face en regard de la chape avec un effort de plaquage F1.

Lors du montage du dispositif de montage selon l'invention sur la chape, la plaque de glissement 44 vient au contact de la face (face latérale) en regard du logement par déformation des charnières 43 et 43' (représentées en figure 7a). La conception de ces charnières minimise la déformation de la surface de contact de la plaque de glissement 44 avec la face 22 du logement.

Les charnières sont conçues pour avoir un effort de plaquage F2 de la plaque de glissement 44 inférieur à l'effort radial (ou tangentiel) αF1 résultant de l'effort F1 de la lame ressort 40.

Une fois le patin de frein mis en place, le fait de découpler la fonction ressort de la fonction glissement permet de diminuer voir de supprimer certaines conditions d'apparition de bruit et notamment dans le cas de faibles pressions de freinage type manoeuvres parking.

La force F2 sera d'autant plus faible que le système de charnière présentera une grande souplesse.

Selon une forme de réalisation de l'invention, les plaques de glissement 44 et 42 sont acier inoxydable assurant un bon glissement des oreilles de patins de freins.

On notera qu'il conviendra de prévoir une longueur L2 de la plaque de glissement 42 supérieure à la hauteur H1 du bossage 25 de façon que l'extrémité 45 de la plaque 44 puise être plaquée contre la face 22 du logement de la chape.

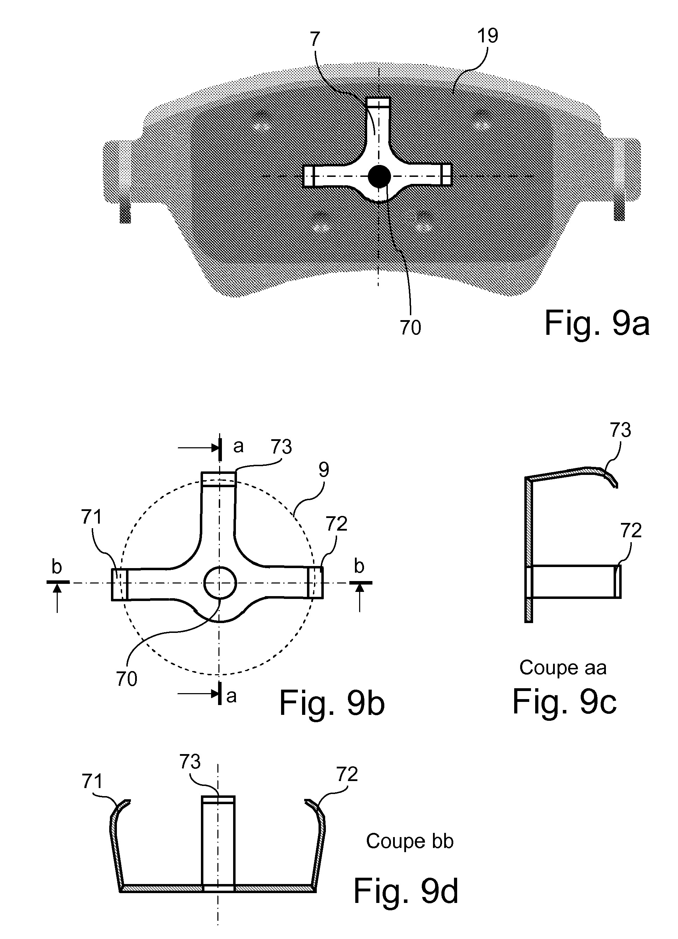

Les figures 9a à 9d représentent une autre variante de réalisation du dispositif de montage d'un patin de frein selon l'invention.

Ce dispositif comporte une pièce 7 à emboîtement ou à griffes destinée à s'emboîter sur la surface extérieure d'un piston de frein.

Cette pièce est fixée sur la face du patin qui est opposée à la face portant la plaquette de frein. Il s'agit donc de la face du patin sur laquelle agit le piston de frein. A titre d'exemple, la pièce 7 comporte un trou central 70 permettant de la fixer au patin.

Les figures 9b à 9d représentent plus en détails un exemple de réalisation de cette pièce 7. Elle comporte, par exemple, des lames 71, 72, 73 qui sont sensiblement parallèles à une direction axiale. Ces lamelles sont destinées à s'emboîter autour d'un piston de frein représenté par le pointillé 9 sur la figure 9b.

Comme représenté sur les vues en coupes aa et bb des figures 9c et 9d, les extrémités libres des lames 71 à 73 peuvent être avantageusement recourbées vers l'axe du dispositif pour permettre un accrochage plus efficace sur la paroi extérieure du piston de frein.

Sur les figures 9b à 9d on a prévu trois lames 71 à 73 mais selon une variante de réalisation on pourrait ne prévoir que les lames 71 et 72.

Selon une autre variante de réalisation, on pourrait prévoir quatre lames, la quatrième lame étant alors symétrique de la lame 73 par rapport au centre du dispositif.

L'objectif de cette pièce 7 est de réaliser un couplage du patin de frein 19 à un piston de frein de telle sorte que ce couplage présente une certaine souplesse et permette notamment un faible déplacement latéral du patin de frein sans induire un effort latéral sur le piston de frein.

Cette pièce 7 peut être utilisée pour le montage d'un patin de frein en combinaison avec le dispositif à ressort 5 décrit en relation avec les figures 2a à 4b.

Elle peut être également utilisée avec le dispositif à ressort 6 des figures 5a à 5e.

On peut également prévoir de l'utiliser avec le dispositif à lames de glissement des figures 6a à 8c.

## Revendications

1. Dispositif de montage d'un patin de frein dans des logements d'une chape d'un frein à disque, ledit patin de frein (19) comprenant à deux de ses extrémités deux oreilles de montage (10, 10') et chaque oreille susceptible d'être montée dans un logement (11,11') d'une chape (2) d'un frein à disque, le dispositif comportant pour chaque oreille du patin, un premier ressort (5) de forme linéaire ou lamellaire, destiné à prendre appui, d'une part, sous une face inférieure (12) de l'oreille et, d'autre part, sur la face inférieure (27) du logement de la chape de façon à écarter la face inférieure (12) de l'oreille de la face inférieure (27) du logement, **caractérisé en ce que** ledit ressort comporte:
- une première branche d'appui (51) placée contre la face inférieure (12) de l'oreille du patin,
- une deuxième branche de glissement (52) destinée à être en contact avec la face inférieure (27) du logement, cette branche ayant une forme courbe, étant située parallèlement à un plan perpendiculaire au plan de l'oreille et ayant une surface convexe destinée à glisser sur ladite face inférieure du logement,
- une troisième branche (53) et une quatrième branche (54) reliée entre elles et permettant de reliée la première branche à la deuxième branche pour les écarter l'une de l'autre.

2. Dispositif de montage selon la revendication 1, **caractérisé en ce qu'**il comporte un deuxième ressort (6) comportant:
- une première branche d'appui (61) destinée à être placée contre une face latérale (18) de l'oreille du patin,
- une deuxième branche de glissement (62) destinée à être en contact avec une face latérale (21) du logement de la chape, cette branche ayant une forme courbe, étant située parallèlement à un plan perpendiculaire au plan de l'oreille et ayant une surface convexe destinée à glisser sur ladite face latérale du logement,
- une troisième branche (63) et une quatrième branche (64) reliée entre elles et permettant de relier la première branche (61) à la deuxième branche (62) pour les écarter l'une de l'autre.

3. Dispositif de montage selon l'une quelconque des revendications **1** ou **2**, **caractérisé en ce que** lesdits premier et deuxième ressorts comportent chacun une cinquième branche (57, 67) reliée à la deuxième branche (52, 62) du ressort et permettant d'enserrer les faces axiales de l'oreille en coopération avec la troisième branche (53, 63).

4. Dispositif de montage selon l'une quelconque des revendications **1** ou **2**, **caractérisé en ce que** lesdits premier et deuxième ressorts comportent chacun une sixième branche (55, 65) reliée à la première branche (51, 61) du ressort et permettant d'enserrer les faces axiales de l'oreille du patin en coopération avec la troisième branche (53, 63).

5. Dispositif de montage selon la revendication **4, caractérisé en ce que** lesdits premier et deuxième ressorts comportent chacun une septième branche (56, 66) reliant la sixième branche (55, 65) à la deuxième branche (52, 62) du ressort.

6. Dispositif de montage selon la revendication **4 ou 5**, **caractérisé en ce que** lesdits premier et deuxième ressorts sont de forme filaire et leurs différentes branches sont situées parallèlement à un plan qui est perpendiculaire au plan du patin.

7. Dispositif de montage selon l'une quelconque des revendications précédentes, **caractérisé en ce qu'**il comporte une première plaque de glissement (44) destinée à être intercalée entre une face latérale d'une oreille de montage du patin et une face latérale (22) d'un logement de la chape, cette première plaque de glissement étant couplée mécaniquement, par une charnière élastique (43) dont l'élasticité est supérieure à l'élasticité de la première plaque de glissement, à un dispositif de fixation (40, 41, 42) destiné à être fixé à la chape.

8. Dispositif de montage selon la revendication 7, **caractérisé en ce que** la première plaque de glissement est couplée par une extrémité (45) au dispositif de fixation (40, 41, 42) de telle façon que son extrémité opposée (48) soit destinée à exercer un effort de pression sur la face dudit logement de la chape lorsque ledit dispositif de montage est monté sur la chape.

9. Dispositif de montage selon la revendication 8, **caractérisé en ce qu'**une arête de ladite première plaque de glissement est couplée à une arête d'une deuxième plaque de glissement (42) appartenant au dispositif de fixation, laquelle deuxième plaque de fixation est destinée à être plaquée contre une face radiale (23) dudit logement de la chape, ladite charnière (43) comportant au moins un élément de raccordement dont la longueur est inférieure à la longueur desdites arêtes des première et deuxième plaques de glissement.

10. Dispositif de montage selon la revendication 9, **caractérisé en ce que** l'angle formé par la première et la deuxième plaque (44, 42), lorsque le dispositif de montage n'est pas monté sur une chape de frein à disque, est supérieur à l'angle formé par les faces latérale (22) et radiale (23) du logement d'une chape sur laquelle le dispositif de montage est destiné à être monté.

11. Dispositif de montage selon la revendication 10, **caractérisé en ce que** ledit angle formé par la première et la deuxième plaque (44, 42), lorsque le dispositif de montage n'est pas monté sur une chape de frein à disque, est supérieur à 90 degrés.

12. Dispositif de montage selon la revendication 11, **caractérisé en ce que** le dispositif de fixation comporte une première lame ressort (40) qui coopère ave la deuxième plaque de glissement (42) pour enserrer une pièce de fixation (25) appartenant à la chape.

13. Dispositif de montage selon la revendication 12, **caractérisé en ce que** le dispositif de fixation comporte une deuxième et une troisième lame ressort (41, 41') qui enserrent ladite pièce de fixation (25) appartenant à la chape.

14. Dispositif de montage selon l'une quelconque des revendications 7 à 13 **caractérisé en ce que** la première plaque de glissement (44) et/ou la deuxième plaque de glissement (42) sont en acier inoxydable.

15. Dispositif de montage selon l'une quelconque des revendications précédentes, **caractérisé en ce qu'**il comporte un dispositif de couplage (7) fixé sur la face du patin, destinée à faire face à un piston de commande de frein, sensiblement dans une zone centrale du patin de frein, ledit dispositif de couplage étant destiné à coupler le patin à un piston de commande de frein et comportant des lamelles élastiques qui sont destinées à enserrer la périphérie dudit piston de commande.

16. Dispositif de montage selon la revendication 16, **caractérisé en ce qu'**il comporte deux lames (71, 72) située selon une direction latérale (X) et destinées à être diamétralement opposée par rapport à l'axe du piston de commande de frein.

17. Dispositif de montage selon la revendication 16, **caractérisé en ce qu'**il comporte une lame (73) située selon une direction radiale (Y), et destinée à être au dessus dudit piston de commande de frein.

18. Application à un frein à disque **caractérisée en ce qu'**il comporte un ou plusieurs dispositifs de montage selon l'une quelconque des revendications précédentes pour guider les patins de frein.

19. Application à un frein à disque selon la revendication 18, **caractérisé en ce qu'**il comporte un dispositif de montage associé à chaque oreille des patins de frein.

## Patentansprüche

1. Montagevorrichtung eines Bremsbelagträgers in Aufnahmen eines Jochs einer Scheibenbremse, wobei der Bremsbelagträger (19) an zwei seiner Enden zwei Montageansätze (10, 10') aufweist und jeder Ansatz dazu eingerichtet ist, in einer Aufnahme (11, 11') eines Jochs (2) einer Scheibenbremse angebracht zu werden, wobei die Vorrichtung für jeden Ansatz des Bremsbelagträgers eine erste Feder (5) von linearer oder blattförmiger Form aufweist, die dazu bestimmt ist, sich einerseits an einer unteren Fläche (12) des Ansatzes und andererseits an der unteren Fläche (27) der Aufnahme des Jochs abzustützen, derart, dass sie die untere Fläche (12) des Ansatzes von der unteren Fläche (27) der Aufnahme wegdrückt, **dadurch gekennzeichnet, dass** die Feder aufweist:
- einen ersten Stützabschnitt (51), der an der unteren Fläche (12) des Ansatzes des Bremsbelagträgers anliegt,
- einen zweiten Gleitabschnitt (52), der dazu bestimmt ist, sich mit der unteren Fläche (27) der Aufnahme in Kontakt zu befinden, wobei dieser Abschnitt eine gekrümmte Form aufweist, parallel zu einer Ebene angeordnet ist, die zu der Ebene des Ansatzes senkrecht ist, und eine konvexe Oberfläche aufweist, die dazu bestimmt ist, auf der unteren Fläche der Aufnahme zu gleiten,
- einen dritten Abschnitt (53) und einen vierten Abschnitt (54), die miteinander verbunden sind und es ermöglichen, den ersten Abschnitt mit dem zweiten Abschnitt zu verbinden, um sie voneinander auf Abstand zu halten.

2. Montagevorrichtung nach Anspruch 1, **dadurch gekennzeichnet, dass** sie eine zweite Feder (6) aufweist, welche aufweist:
- einen ersten Stützabschnitt (61), der dazu bestimmt ist, an einer seitlichen Fläche (18) des Ansatzes des Bremsbelagträgers zur Anlage gebracht zu werden,
- einen zweiten Gleitabschnitt (62), der dazu bestimmt ist, sich mit einer seitlichen Fläche (21) der Aufnahme des Jochs in Kontakt zu befinden, wobei dieser Abschnitt eine gekrümmte Form aufweist, parallel zu einer Ebene angeordnet ist, die zu der Ebene des Ansatzes senkrecht ist, und eine konvexe Oberfläche aufweist, die dazu bestimmt ist, auf der seitlichen Fläche der Aufnahme zu gleiten,
- einen dritten Abschnitt (63) und einen vierten Abschnitt (64), die miteinander verbunden sind und es ermöglichen, den ersten Abschnitt (61) mit dem zweiten Abschnitt (62) zu verbinden, um sie voneinander auf Abstand zu halten.

3. Montagevorrichtung nach einem der Ansprüche 1 oder 2, **dadurch gekennzeichnet, dass** die erste und die zweite Feder jeweils einen fünften Abschnitt (57, 67) aufweisen, der mit dem zweiten Abschnitt (52, 62) der Feder verbunden ist und es ermöglicht, in Zusammenwirkung mit dem dritten Abschnitt (53, 63) die axialen Flächen des Ansatzes zu umklammern.

4. Montagevorrichtung nach einem der Ansprüche 1 oder 2, **dadurch gekennzeichnet, dass** die erste und die zweite Feder jeweils einen sechsten Abschnitt (55, 65) aufweisen, der mit dem ersten Abschnitt (51, 61) der Feder verbunden ist und es ermöglicht, in Zusammenwirkung mit dem dritten Abschnitt (53, 63) die axialen Flächen des Ansatzes des Bremsbelagträgers zu umklammern.

5. Montagevorrichtung nach Anspruch 4, **dadurch gekennzeichnet, dass** die erste und die zweite Feder jeweils einen siebenten Abschnitt (56, 66) aufweisen, der den sechsten Abschnitt (55, 65) mit dem zweiten Abschnitt (52, 62) der Feder verbindet.

6. Montagevorrichtung nach Anspruch 4 oder 5, **dadurch gekennzeichnet, dass** die erste und die zweite Feder drahtförmig ausgebildet sind und ihre verschiedenen Abschnitte parallel zu einer Ebene angeordnet sind, welche zu der Ebene des Bremsbelagträgers senkrecht ist.

7. Montagevorrichtung nach einem der vorhergehenden Ansprüche, **dadurch gekennzeichnet, dass** sie eine erste Gleitplatte (44) aufweist, die dazu bestimmt ist, zwischen einer seitlichen Fläche eines Montageansatzes des Bremsbelagträgers und einer seitlichen Fläche (22) einer Aufnahme des Jochs angeordnet zu werden, wobei diese erste Gleitplatte mechanisch, über ein elastisches Scharnier (43), dessen Elastizität größer als die Elastizität der ersten Gleitplatte ist, mit einer Befestigungsvorrichtung (40, 41, 42) gekoppelt ist, die dazu bestimmt ist, an dem Joch befestigt zu werden.

8. Montagevorrichtung nach Anspruch 7, **dadurch gekennzeichnet, dass** die erste Gleitplatte an einem Ende (45) mit der Befestigungsvorrichtung (40, 41, 42) gekoppelt ist, derart, dass ihr gegenüberliegendes Ende (48) dazu bestimmt ist, eine Druckkraft auf die Fläche der Aufnahme des Jochs auszuüben, wenn die Montagevorrichtung an dem Joch angebracht ist.

9. Montagevorrichtung nach Anspruch 8, **dadurch gekennzeichnet, dass** eine Kante der ersten Gleitplatte mit einer Kante einer zweiten Gleitplatte (42) gekoppelt ist, die zu der Befestigungsvorrichtung gehört, wobei diese zweite Befestigungsplatte dazu bestimmt ist, gegen eine radiale Fläche (23) der Aufnahme des Jochs gepresst zu werden, wobei das Scharnier (43) mindestens ein Anschlusselement aufweist, dessen Länge kleiner als die Länge der Kanten der ersten und der zweiten Gleitplatte ist.

10. Montagevorrichtung nach Anspruch 9, **dadurch gekennzeichnet, dass** der Winkel, der von der ersten und der zweiten Platte (44, 42) gebildet wird, wenn die Montagevorrichtung nicht an einem Joch einer Scheibenbremse angebracht ist, größer als der Winkel ist, der von der seitlichen (22) und der radialen (23) Fläche der Aufnahme eines Jochs gebildet wird, an welchem die Montagevorrichtung angebracht werden soll.

11. Montagevorrichtung nach Anspruch 10, **dadurch gekennzeichnet, dass** der Winkel, der von der ersten und der zweiten Platte (44, 42) gebildet wird, wenn die Montagevorrichtung nicht an einem Joch einer Scheibenbremse angebracht ist, größer als 90 Grad ist.

12. Montagevorrichtung nach Anspruch 11, **dadurch gekennzeichnet, dass** die Befestigungsvorrichtung eine erste Blattfeder (40) aufweist, welche mit der zweiten Gleitplatte (42) zusammenwirkt, um ein zu dem Joch gehörendes Befestigungsteil (25) zu umklammern.

13. Montagevorrichtung nach Anspruch 12, **dadurch gekennzeichnet, dass** die Befestigungsvorrichtung eine zweite und eine dritte Blattfeder (41, 41') aufweist, welche das zu dem Joch gehörende Befestigungsteil (25) umklammern.

14. Montagevorrichtung nach einem der Ansprüche 7 bis 13, **dadurch gekennzeichnet, dass** die erste Gleitplatte (44) und/oder die zweite Gleitplatte (42) aus Edelstahl bestehen.

15. Montagevorrichtung nach einem der vorhergehenden Ansprüche, **dadurch gekennzeichnet, dass** sie eine an der Fläche des Bremsbelagträgers befestigte Kopplungsvorrichtung (7) aufweist, die dazu bestimmt ist, einem Bremssteuerkolben im Wesentlichen in einem mittleren Bereich des Bremsbelagträgers zugewandt zu sein, wobei die Kopplungsvorrichtung dazu bestimmt ist, den Bremsbelagträger mit einem Bremssteuerkolben zu koppeln, und elastische Lamellen aufweist, die dazu bestimmt sind, den Umfang des Steuerkolbens zu umklammern.

16. Montagevorrichtung nach Anspruch 16, **dadurch gekennzeichnet, dass** sie zwei Zungen (71, 72) aufweist, die entlang einer seitlichen Richtung (X) angeordnet sind und dazu bestimmt sind, diametral gegenüberliegend in Bezug auf die Achse des Bremssteuerkolbens zu sein.

17. Montagevorrichtung nach Anspruch 16, **dadurch gekennzeichnet, dass** sie eine Zunge (73) aufweist, die entlang einer radialen Richtung (Y) angeordnet ist und dazu bestimmt ist, sich oberhalb des Bremssteuerkolbens zu befinden.

18. Anwendung bei einer Scheibenbremse, **dadurch gekennzeichnet, dass** sie eine oder mehrere Montagevorrichtungen nach einem der vorhergehenden Ansprüche zum Führen der Bremsbelagträger aufweist.

19. Anwendung bei einer Scheibenbremse nach Anspruch 18, **dadurch gekennzeichnet, dass** sie für jeden Ansatz der Bremsbelagträger eine zugeordnete Montagevorrichtung aufweist.

## Claims

1. Device for mounting a brake pad in the housings of a disk brake yoke, said brake pad (19) comprising at two of its ends two mounting ears (10, 10') and each ear being capable of being mounted in a housing (11, 11') of a disk brake yoke (2), the device comprising, for each pad ear, a first spring (5) of linear or lamella shape, intended to bear, on the one hand, below a lower face (12) of the ear and, on the other hand, on the lower face (27) of the housing of the yoke so as to separate the lower face (12) of the ear from the lower face (27) of the housing, **characterized in that** said spring comprises:
- a first bearing limb (51) placed against the lower face (12) of the ear of the pad,
- a second sliding limb (52) intended to be in contact with the lower face (27) of the housing, this limb having a curved shape, being located parallel to a plane perpendicular to the plane of the ear and having a convex surface intended to slide on said lower face of the housing,
- a third limb (53) and a fourth limb (54) connected to one another and making it possible to connect the first limb to the second limb to separate them from one another.

2. Mounting device according to Claim 1, **characterized in that** it comprises a second spring (6) comprising:
- a first bearing limb (61) intended to be placed against a lateral face (18) of the ear of the pad,
- a second sliding limb (62) intended to be in contact with a lateral face (21) of the housing of the yoke, this limb having a curved shape and being located parallel to a plane perpendicular to the plane of the ear and having a convex surface intended to slide on said lateral face of the housing,
- a third limb (63) and a fourth limb (64) connected to one another and making it possible to connect the first limb (61) to the second limb (62) to separate them from one another.

3. Mounting device according to either of Claims 1 and 2, **characterized in that** said first and second springs each comprise a fifth limb (57, 67) connected to the second limb (52, 62) of the spring and making it possible to grip the axial faces of the ear in cooperation with the third limb (53, 63).

4. Mounting device according to either of Claims 1 and 2, **characterized in that** said first and second springs each comprise a sixth limb (55, 65) connected to the first limb (51, 61) of the spring and making it possible to grip the axial faces of the ear of the pad in cooperation with the third limb (53, 63).

5. Mounting device according to Claim 4, **characterized in that** said first and second springs each comprise a seventh limb (56, 66) connecting the sixth limb (55, 65) to the second limb (52, 62) of the spring.

6. Mounting device according to Claim 4 or 5, **characterized in that** said first and second springs are in the form of a wire and their different limbs are located parallel to a plane which is perpendicular to the plane of the pad.

7. Mounting device according to any one of the preceding claims, **characterized in that** it has a first slide plate (44) intended to be inserted between a lateral face of a mounting ear of the pad and a lateral face (22) of a housing of the yoke, this first slide plate being coupled mechanically by a resilient hinge (43) the resilience of which is greater than the resilience of the first slide plate, to a fixing device (40, 41, 42) intended to be fixed to the yoke.

8. Mounting device according to Claim 7, **characterized in that** the first slide plate is coupled at one end (45) to the fixing device (40, 41, 42) such that its opposing end (48) is intended to exert a pressing force on the face of said housing of the yoke when said mounting device is mounted on the yoke.

9. Mounting device according to Claim 8, **characterized in that** one edge of said first slide plate is coupled to an edge of a second slide plate (42) forming part of the fixing device, said second fixing plate being intended to be pressed against a radial face (23) of said housing of the yoke, said hinge (43) comprising at least one connecting element of which the length is less than the length of said edges of the first and second slide plates.

10. Mounting device according to Claim 9, **characterized in that** the angle formed by the first and second plate (44, 42), when the mounting device is not mounted on a disk brake yoke, is greater than the angle formed by the lateral (22) and radial (23) faces of the housing of a yoke on which the mounting device is intended to be mounted.

11. Mounting device according to Claim 10, **characterized in that** said angle formed by the first and the second plate (44, 42), when the mounting device is not mounted on a disk brake yoke, is greater than 90 degrees.

12. Mounting device according to Claim 11, **characterized in that** the fixing device comprises a first leaf spring (40) which cooperates with the second slide plate (42) to grip a fixing part (25) which forms part of the yoke.

13. Mounting device according to Claim 12, **characterized in that** the fixing device comprises a second and a third leaf spring (41, 41') which grip said fixing part (25) which forms part of the yoke.

14. Mounting device according to any one of Claims 7 to 13, **characterized in that** the first slide plate (44) and/or the second slide plate (42) are made of stainless steel.

15. Mounting device according to any one of the preceding claims, **characterized in that** it comprises a coupling device (7) fixed to the face of the pad, intended to be located opposite a brake operating piston, substantially in a central region of the brake pad, said coupling device being intended to couple the pad to a brake operating piston and comprising resilient blades which are intended to grip the periphery of said operating piston.

16. Mounting device according to Claim 16, **characterized in that** it comprises two blades (71, 72) located in a lateral direction (X) and intended to be diametrically opposed relative to the axis of the brake operating piston.

17. Mounting device according to Claim 16, **characterized in that** it comprises a blade (73) located in a radial direction (Y) and intended to be above said brake operating piston.

18. Application to a disk brake **characterized in that** it comprises one or more mounting devices according to any one of the preceding claims to guide the brake pads.

19. Application to a disk brake according to Claim 18, **characterized in that** it comprises a mounting device associated with each ear of the brake pads.
